Europäisches Patentamt

European Patent Office

Office européen des brevets

(19)

(11) Veröffentlichungsnummer: **0 331 931**
**B1**

(12)                              EUROPÄISCHE  PATENTSCHRIFT

(45) Veröffentlichungstag der Patentschrift:
**12.12.90**

(21) Anmeldenummer: **89102467.1**

(22) Anmeldetag: **14.02.89**

(51) Int. Cl.⁵: **A01C 7/04**

(54)  **Einzelkornsämaschine.**

(30) Priorität: **11.03.88 DE 3808090**

(43) Veröffentlichungstag der Anmeldung:
**13.09.89 Patentblatt 89/37**

(45) Bekanntmachung des Hinweises auf die Patenterteilung:
**12.12.90 Patentblatt 90/50**

(84) Benannte Vertragsstaaten:
**DE ES FR IT NL**

(56) Entgegenhaltungen:
**DE-A- 2 242 272**
**US-A- 3 240 175**
**US-A- 3 788 518**

(73) Patentinhaber: **ACCORD Landmaschinen Heinrich Weiste & Co. GmbH, Coesterweg 42, D-4770 Soest(DE)**

(72) Erfinder: **Schneiders, Walter, Bleiberg 67, D-5160 Düren(DE)**
Erfinder: **Meyer, Otfried, Römerstrasse 6, D-5168 Nideggen-Schmidt(DE)**
Erfinder: **Bach, Alexander, Berta-Timmermann-Strasse, D-5160 Düren(DE)**
Erfinder: **Gugenhan, Heinrich, Am Kirchendriesch 45, D-5160 Düren 5(DE)**

(74) Vertreter: **Habbel, Hans-Georg, Dipl.-Ing., Postfach 3429 Am Kanonengraben 11, D-4400 Münster(DE)**

## Beschreibung

Die Erfindung bezieht sich auf eine Einzelkornsämaschine gemäß dem Oberbegriff des Patentanspruches 1.

Eine gattungsbildende Einzelkornsämaschine wird in der DE-A 22 42 272 beschrieben. Bei dieser bekannten Anordnung besteht das Unterbrecherelement aus einer auf der Innenseite der Lochplatte im Bereich der Sauglöcher ablaufenden, aus elastischem Werkstoff hergestellten Rolle. Diese Anordnung hat den Nachteil, daß die Rolle trotz ihrer elastischen Ausbildung, beispielsweise mittels eines Gummimantels, im wesentlichen nur ein einziges Loch bei ihrem Überrollen abdeckt und daß dadurch nicht sichergestellt ist, daß das am Loch durch das hinter der Lochplatte wirkende Vakuum gehaltene Saatkorn tatsächlich abgelöst wird. Aus diesem Grunde wird bei der bekannten Anordnung auch vorgeschlagen, daß ein zusätzlicher Abwerfer vorgesehen wird, der auf der Außenseite der Lochplatte dem Unterbrecherelement gegenüberliegend vorgesehen wird.

Aus der gattungsbildenden Literaturstelle ist es aber auch bekannt, daß das Unterbrecherelement eine mit ihrem Rand gegen die Innenseite der Lochplatte im Bereich der Sauglöcher anliegende Sperrscheibe ist, welche um eine gegenüber der Trommelachse geringfügig geneigte Achse drehbar ist und nur einen wenig größeren Durchmesser als der Lochkreis der Lochplatte aufweist. Auch bei dieser möglichen Anordnung eines Unterbrecherelementes wird nur ein einziges Loch abgedeckt und auch hier ist das Ablösen des von dem Saugloch gehaltenen Saatkornes problematisch.

Die bekannte Anordnung hat weiterhin den Nachteil, daß dann, wenn durch das Vakuum kleine Saatkornpartikelchen mit angesaugt werden, diese dazu führen können, daß das eigentliche Unterbrecherelement das Saugloch nicht voll abdeckt, sondern daß hier noch eine Verbindung zum Vakuum bestehen bleibt, so daß dadurch wiederum das Ablösen des Saatkornes erschwert wird.

In der Praxis mußte festgestellt werden, daß dem bekannten Unterbrecherelement eine aufwendige Konstruktion zugrundeliegt, die ein arbeitsaufwendiges Auswechseln erforderlich macht.

Eine verschleißfreie und zuverlässig arbeitende Vorrichtung, die nicht ausgewechselt werden muß, ist aus der DE-A 34 19 951 bekannt. Hierbei handelt es sich aber um eine Einzelkornsämaschine, die nach einem anderen Prinzip arbeitet, als die gattungsbildende Einzelkornsämaschine. Bei der Vorrichtung gemäß DE-PS 34 19 951 sind die Zellen zur Aufnahme der Saatkörner konisch von außen nach innen verlaufend ausgebildet, und die Vereinzelung erfolgt durch Druckluft, die von außen in die trichterförmigen Zellen gerichtet ist. Hierdurch besteht die Möglichkeit des Verstopfens der Zellen.

Weiterhin ist bei der bekannten Einrichtung eine am Zellenrad berührungslos und damit verschleißarme Druckluftkammer vorgesehen, die aber mit einer Abblasdüse ausgerüstet ist, die ständig mit Druckluft die Körner aus den Zellen des Zellenrades von innen nach außen ausbläst und dabei auch auf den umlaufenden Spalt zwischen der Gehäusewand und dem Zellenrad einwirkt. Hierdurch wird die Fallgeschwindigkeit der Körner unterschiedlich beeinflußt.

Aus der US-A 3 240 175 ist eine Säeinrichtung bekannt, die aus einer großen Hohltrommel besteht, auf der Röhrchen angeordnet sind, die in den Saatgutvorrat eingreifen. Diese Röhrchen stehen unter Unterdruckeinfluß.

Im Bereich der geplanten Abwurfstelle ist ein Element vorgesehen, das eine Kammer aufweist, die mit der Atmosphäre in Verbindung steht und die dadurch bewirkt, daß sich die von den Röhrchen angesaugten Saatkörner lösen. Um ein sicheres Ablösen zu erreichen, steht ein weiterer Teil dieser Kammer unter Überdruck.

Der Erfindung liegt die Aufgabe zugrunde, die gattungsbildende Einrichtung dahingehend zu verbessern, daß ein sicheres Ablösen des von dem Saugloch gehaltenen Saatkornes und ein exakter Abwurf bewirkt wird, daß das eigentliche Unterbrecherelement wartungsfreundlicher gestaltet wird, so daß seine Reparatur bzw. sein Auswechseln auch von einem Laien problemlos durchgeführt werden kann und daß ein Verstopfen der Hohlkammer nicht erfolgen kann.

Diese der Erfindung zugrundeliegende Aufgabe wird durch die kennzeichnenden Merkmale des Hauptanspruches gelöst.

Vorteilhafte Ausgestaltungen sind in den Unteransprüchen erläutert.

Dadurch, daß der Abwerfer mit einer innenliegenden Hohlkammer ausgerüstet ist, wird auch erreicht, daß nach dem Absperren evtl. in diese Hohlkammer eingetretene Fremdpartikel den Abwerfervorgang nicht stören, wobei diese Fremdpartikel dann durch die speziell geformte schräge Rückwand wieder austreten können.

Zur weiteren Ausgestaltung wird vorgeschlagen, daß der Abwerfer an einer Feder gelagert ist, die ihn auf die Lochplatte aufpreßt. Hierdurch kann er sich optimal an jede Säscheibe anpassen. Die Befestigung selbst stellt eine Art Kugelkopf dar und kann deshalb nach allen Seiten gleichmäßig ausweichen. Durch diese Befestigungsart wird weiterhin erreicht, daß eine schnelle Montage und Demontage ohne Werkzeug möglich ist.

Durch die bestimmte definierte Baulänge des Abwerfers wird erreicht, daß dieser ständig mindestens zwei Sauglöcher überdeckt und dadurch ständig Atmosphäre vom zweiten Loch aufnimmt, was beim Abwurf des gehaltenen Saatkornes eine wesentliche Rolle spielt.

Zusätzlich kann die gebildete Hohlkammer des Abwerfers noch mit einem höheren Druckniveau in Verbindung stehen, um den Abwurf zu unterstützen.

Die schmale stegartige Ausbildung der Wände bewirkt eine optimale Anpassung und Abdichtung, wobei zusätzlich durch die bewegliche Aufhängung des Abwerfers gewährleistet ist, daß der Verschleiß vergleichmäßigt wird und somit die Abdichtung durch ggf. auftretenden Verschleiß nicht beeinträchtigt wird.

Ein Ausführungsbeispiel der Erfindung wird nachfolgend anhand der Zeichnungen erläutert. Die Zeichnungen zeigen dabei in

Fig. 1 schaubildlich eine Einzelkornsämaschine, in

Fig. 2 in größerem Maßstab eine Ansicht auf eine Lochplatte von außen gesehen, wobei das an der Rückseite dieser Lochplatte angeordnete Unterbrecherelement durch Wegbruch von Teilen der Lochplatte erkennbar ist, in

Fig. 3 einen Schnitt gemäß der Linie 3 – 3 in Fig. 2 und in

Fig. 4 einen Schnitt gemäß der Linie 4 – 4 in Fig. 2.

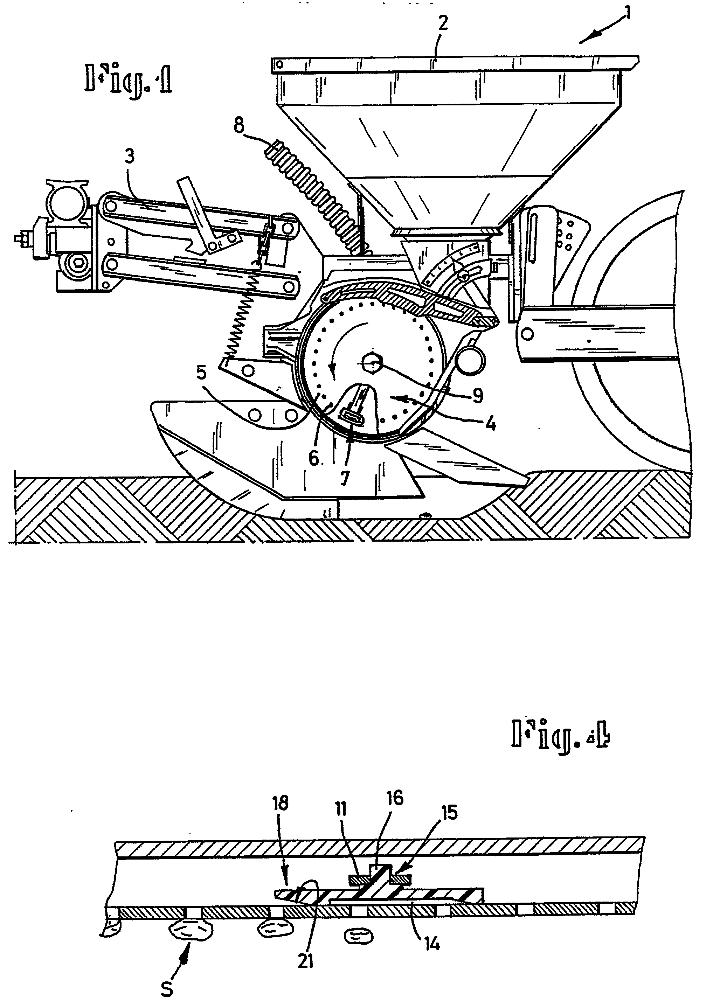

In Fig. 1 ist mit 1 eine Einzelkornsämaschine bezeichnet, die z. B. einen Saatgutbehälter 2 aufweist und über eine Parallelogrammanlenkung 3 an eine Zugmaschine angeschlossen werden kann. Unterhalb und in Verbindung stehend mit dem Saatgutbehälter 2 ist eine Trommel 4 vorgesehen, die nach vorne hin durch eine Lochplatte 5 abgedeckt wird, in der Sauglöcher 6 angeordnet sind, über die das hinter der Lochplatte 5 erzeugte Vakuum auf die dadurch von den Sauglöchern 6 festgehaltenen Saatkörner wirken kann, so daß vor jedem Saugloch 6 ein Saatkorn gehalten wird. Im unteren Bereich der Trommel 4 bzw. der Lochplatte 5 ist an der Rückseite der Lochplatte 5 ein Unterbrecherelement 7 angeordnet (in diesem Bereich ist in Fig. 1 die Lochplatte 5 weggebrochen) und durch Trennen des Vakuums vom Saugloch 6 fällt nunmehr das vor dem abgedeckten Loch befindliche Saatkorn in die von einem Säschar gezogene Furche. Anschließend wird durch ein Zustreicherelement die Furche wieder geschlossen.

Die Trommel 4 läuft um eine Achse 9 um, durch die gleichzeitig an der Rückseite der Lochplatte 5 das Vakuum erzeugt wird, indem das Innere der Trommel 4 über einen Saugschlauch 8 an eine Vakuumquelle angeschlossen ist.

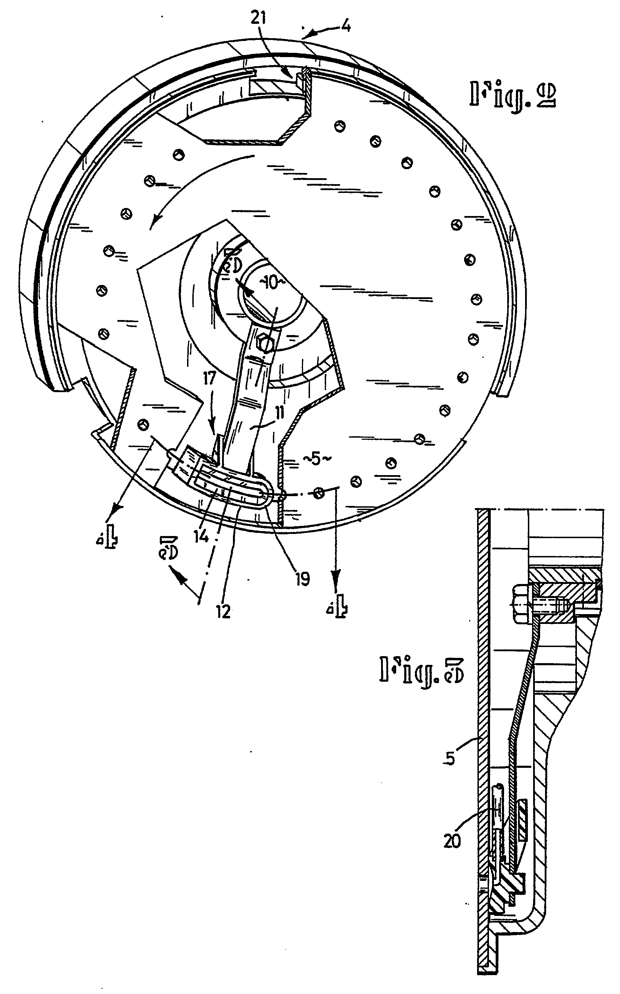

In größerem Maßstab sind in den Fig. 2 bis 4 Teile der Lochplatte 5 dargestellt, so daß das Unterbrecherelement 7 erkennbar ist. Dieses Unterbrecherelement 7 ist im Bereich der Achse 9 ortsfest fest angeordnet, dreht sich also mit der Lochplatte 5 nicht mit, wobei in Fig. 2 weiterhin eine Saugöffnung 10 erkennbar ist, die mit dem Inneren des Saugschlauches 8 in Verbindung steht.

Das Unterbrecherelement 7 besteht im wesentlichen aus einem Federbügel 11, der einenendes festgelegt ist und an seinem vorderen, unteren, freien Ende einen Abwerfer 12 an die Rückseite der Lochplatte 5 anpreßt. Hierzu ist im Federbügel 11 eine Bohrung 15 (Fig. 4) vorgesehen, durch die ein Zapfen 16 des vorzugsweise aus Hartkunststoff bestehenden Abwerfers 12 greift, wobei weiterhin der Abwerfer 12 - wie dies deutlich Fig. 2 zeigt - mittels eines Bügels 17 den Federbügel 11 übergreift. Hierdurch wird eine Art "Kugelkopflagerung" geschaffen, durch die der eigentliche Abwerfer 12 an Unebenheiten der Lochplatte 5 leicht anpaßbar ist und wodurch gleichzeitig eine schnelle Montage und Demontage ohne zusätzliche Werkzeuge des Abwerfers 12 vom Federbügel 11 möglich ist, da der Abwerfer 12 als Verschleißelement betrachtet werden muß, das häufiger ausgewechselt werden sollte.

An der Unterseite des Abwerfers 12, d. h. der Seite, mit der der Abwerfer 12 an der Rückseite der Lochplatte 5 anliegt, weist der Abwerfer 12 eine Hohlkammer 14 auf, wobei der Abwerfer 12 so groß gewählt wird, daß er mindestens zwei Sauglöcher 6 übergreift, wie dies besonders deutlich aus Fig. 4 ersichtlich wird, so daß dadurch ständig Atmosphäre von der Vorderseite der Lochplatte 5 in die Hohlkammer 14 einströmen kann, wodurch das Ablösen des von einem Saugloch gehaltenen Saatkornes "S" erleichtert wird.

Die die Hohlkammer 14 umschließenden Wände 19 des Abwerfers 12 sind als schmale Stege ausgebildet, was besonders gut aus Fig. 2 hervorgeht, so daß dadurch eine optimale Anpassung an die Lochplatte 5 erreicht wird.

In Bewegungsrichtung der Lochplatte 5 gesehen, wobei diese Bewegungsrichtung in Fig. 2 mit dem Pfeil $F_1$ angedeutet ist, ist die rückwärtige innere Seite der Wand 19 des Abwerfers 12 abgeschrägt ausgebildet, so daß hier ein Austransportieren von Fremdpartikelchen leicht möglich ist.

Die Anlaufseite 18 des Abwerfers 12 ist als Keilschräge 21 gestaltet, so daß auch bei durch ein Saugloch 6 durchragenden Saatkörnern oder Saatpartikelchen ein gutes Aufgleiten des Abwerfers 12 und ein Zurückschieben dieser Teilchen gewährleistet ist. Der Abwerfer 12 drückt dann dieses Partikelchen durch das Loch nach vorne zur Vorderseite der eigentlichen Lochplatte 5.

Durch die Länge der Hohlkammer 14 wird - wie dies Fig. 4 deutlich macht - erreicht, daß die Hohlkammer 14 stets Atmosphärendruck aufweist, obgleich sich der Abwerfer 12 in dem Raum der Trommel 4 befindet, die unter Vakuum steht. Um diesen Atmosphärendruck in der Hohlkammer 14 noch sicherer zu gestalten oder noch stärker auszubilden, kann eine Verbindungsleitung 20 (Fig. 3) vorgesehen sein, die die Hohlkammer 14 mit einem höheren Druckniveau in Verbindung bringt.

**Patentansprüche**

1. Einzelkornsämaschine (1) mit einer zum Teil in oder an einem Saatgutbehälter (2) angeordneten, um eine im wesentlichen waagerechte Achse (9) drehbaren Trommel (4), deren Innenraum an eine Unterdruckquelle angeschlossen ist und die durch eine normal zur Achse (9) angeordnete, für das Saatgut zugängliche, die Trommel (4) einseitig begrenzende Lochplatte (5) abgeschlossen ist, in der im wesentlichen parallel zur Achse (9) ausgerichtete Sauglöcher (6) vorgesehen sind, wobei an der Innenseite der Lochplatte (5) im unteren Bereich derselben innerhalb der Trommel (4) ein ortsfestes Unterbrecherelement (7) angreift, das einen Abwerfer (12) trägt, dessen Abstand von der Achse (9) der Trommel (4) annähernd dem Radius des Lochkreises der Sauglöcher (6) entspricht, dadurch gekennzeichnet, daß der Abwerfer (12) zur Lochplatte (5) hin eine Hohlkammer (14) aufweist, die eine solche Länge besitzt, daß mindestens stets zwei Sauglöcher (6) von dem Abwerfer (12) übergriffen werden und die Hohlkammer (14) an ihrem in Drehrichtung der Lochplatte (5) gesehen rückwärtigen Ende zur Lochplatte (5) hin im Inneren abgeschrägt ist.

2. Einzelkornsämaschine nach Anspruch 1, dadurch gekennzeichnet, daß das Unterbrecherelement (7) aus einem Federbügel (11) besteht, der einenendes fest an einem feststehenden Teil der Trommel (4) angeordnet ist und anderenendes einen Abwerfer (12) trägt, der aus einem unflexiblen Werkstoff besteht.

3. Einzelkornsämaschine nach Anspruch 1, dadurch gekennzeichnet, daß das Unterbrecherelement (7) aus einem starren Bügel (11) besteht, der einenendes fest an einem feststehenden Teil der Trommel (4) angeordnet ist und anderenendes einen Abwerfer (12) trägt, der aus einem flexiblen Werkstoff besteht.

4. Einzelkornsämaschine nach einem oder mehreren der vorhergehenden Ansprüche, gekennzeichnet durch eine am vorderen Ende des Federbügels (11) angeordnete Bohrung (15), einen an der Oberseite des Abwerfers (12) angeordneten, in die Bohrung (15) einsetzbaren Zapfen (16) und einen an dem Abwerfer (12) angeordneten, den Federbügel (11) übergreifenden Bügel (17).

5. Einzelkornsämaschine nach einem oder mehreren der vorhergehenden Ansprüche, dadurch gekennzeichnet, daß an der Anlaufseite (18) des Abwerfers (12) dieser an seiner Unterseite keilförmig ausgebildet ist, wobei sich die Keilschräge (21) vom freien vorderen Rand des Abstreifers (14) bis zur die Hohlkammer (14) begrenzenden Vorderwand erstreckt.

6. Einzelkornsämaschine nach einem oder mehreren der vorhergehenden Ansprüche, dadurch gekennzeichnet, daß die die Hohlkammer (14) allseitig begrenzenden Wände (19) als schmale Stege ausgebildet sind.

7. Einzelkornsämaschine nach einem oder mehreren der vorhergehenden Ansprüche, dadurch gekennzeichnet, daß die Hohlkammer (14) mit einer Verbindungsleitung (20) ausgerüstet ist, die mit einem höheren Druckniveau in Verbindung steht.

8. Einzelkornsämaschine nach einem oder mehreren der vorhergehenden Ansprüche, dadurch gekennzeichnet, daß die Lochplatte über einen Bajonettverschluß lösbar an der Trommel (4) gehalten wird.

## Revendications

1. Machine à semer monograine (1) comprenant un tambour (4) disposé en partie dans ou contre un réservoir de semences (2), qu'on peut faire tourner autour d'un axe sensiblement horizontal (9), et dont le volume intérieur peut être raccordé à une source de dépression et qui est fermé par une plaque perforée (5), disposée perpendiculairement à l'axe (9), accessible aux semences, et qui limite d'un côté le tambour (4), plaque dans laquelle sont prévus des trous d'aspiration (6) orientés sensiblement parallèlement à l'axe (9), cependant que, contre la face inférieure de la plaque perforée (5), est appuyé, dans la région inférieure de cette plague, à l'intérieur du tambour (4), un élément interrupteur fixe (7) qui porte un éjecteur (12) dont la distance à l'axe (9) du tambour (4) correspond approximativement au rayon du cercle de perforation des trous d'aspiration (6), caractérisée par le fait que l'éjecteur (12) présente une chambre creuse (14) dirigée vers la plaque perforée (5), qui possède une longueur telle gu'au moins deux trous d'aspiration (6) soient masquées par l'éjecteur (12) et la chambre creuse (14) est chanfreinée à son extrémité arrière, par rapport au sens de rotation de la plaque perforée (5), sur la face qui regarde la plaque perforée (5), à l'intérieur.

2. Machine à semer monograine selon la revendication 1, caractérisée en ce que l'élément interrupteur (7) est composé d'un ressort-lame courbe (11) qui est monté fixe à une extrémité contre une partie fixe du tambour (4) et porte a l'autre extrelnité un éjecteur (12) qui est composé d'une matière rigide.

3. Machine à semer monograine selon la revendication 1, caractérisée par le fait que l'élément interrupteur (7) est composé d'une lame rigide (11) qui est montée fixe à une extrémité sur une partie fixe du tambour (4) et porte à son autre extrémité un éjecteur (12) qui est fait d'une matière flexible.

4. Machine à semer monograine selon une ou plusieurs des revendications précédentes, caractérisée par un perçage (15) disposé à l'extrémité avant du ressort-lame courbe (11), un tenon (16) prévu sur la face supérieure de l'éjecteur (12), qui peut être engagé dans le perçage (15), et un étrier (17) prévu sur l'éjecteur (12) et qui recouvre l'arceau élastique (11).

5. Machine à semer monograine selon une ou plusieurs des revendications précédentes, caractérisée par le fait que, sur le côté d'entrée (18) de l'éjecteur (12), cet éjecteur présente une forme en coin le long de sa face inférieure, la rampe (21) du coin s'étendant du bord avant libre du racleur jusqu'à la paroi avant qui limite la chambre creuse (14).

6. Machine à semer monograine selon une ou plusieurs des revendications précédentes, caractérisée par le fait que les parois (19) qui limitent la chambre creuse (14) de tous côtés sont constituées par des nervures étroites.

7. Machine à semer monograine selon une ou plusieurs des revendications précédentes, caractérisée par le fait que la chambre creuse (14) est équipée d'une conduite de liaison (20) qui est en communication avec une pression de plus haut niveau.

8. Machine à semer monograine selon une ou plusieurs des revendications précédentes, caractérisée par le fait que la plaque perforée est fixée amovible au tambour (4) par un assemblage à baïonnette.

## Claims

1. A seed spacing sowing machine (1) comprising a drum (4) rotatable about a substantially horizontal shaft (9) and arranged partly in or on a seed container, the interior of which drum is connected to a negative pressure source and which drum is closed by a perforated plate (5) defining one side of the drum (4), arranged normal to the shaft (9) and accessible to the seed, in which perforated plate (5) there are provided suction holes (6) directed substantially parallel to the shaft (9), a stationary interrupt element (7) being applied against the inside of the perforated plate (5) in the lower area thereof inside the drum (4), said interrupt element (7) carrying a releasing device (12) the distance of which from the shaft (9) of the drum (4) corresponds approximately to the radius of the circle of suction holes (6), characterized in that the releasing device (12) comprises a hollow chamber (14) directed towards the perforated plate (5, which chamber (14) is of a length such that at least two suction holes (6) are always overlapped by the releasing device (12) and in that the hollow chamber (14) is internally bevelled at the rear end in relation to the perforated plates when viewed in the rotational direction of the perforated plate (5).

2. A seed spacing sowing machine according to claim 1, characterized in that the interrupt element (7) consists of a spring band (11), which is at one end arranged fixed to a stationary part of the drum (4) and at the other end carries a releasing device (12, which consists of an inflexible material.

3. A seed spacing sowing machine according to claim 1, characterized in that the interrupt element (7) consists of a rigid band (11) which is at one end arranged fixed to a stationary part of the drum (4) and at the other end carries a releasing device (12) which consists of a flexible material.

4. A seed spacing sowing machine according to one or more of the preceding claims, characterized by a bore (15) arranged at the front end of the spring band (11), a pin (16) arranged on the top of the releasing device (12) and insertable into the bore (15) and a clip (17) arranged on the releasing device (12) and overlapping the spring band (11).

5. A seed spacing sowing machine according to one or more of the preceding claims, characterized in that the leading side (18) of the releasing device (12) is constructed on its bottom as a wedge, the wedge taper (21) extending from the free front edge of the stripper (14) to the front wall defining the hollow chamber (14).

6. A seed spacing sowing machine according to one or more of the preceding claims, characterized in that the walls (19) defining the hollow chamber (14) on all sides are constructed as narrow webs.

7. A seed spacing sowing machine according to one or more of the preceding claims, characterized in that the hollow chamber (14) is equipped with a connecting line (20) which is connected to a higher pressure level.

8. A seed spacing sowing machine according to one or more of the preceding claims, characterized in that the perforated plate is held releasably on the drum (4) via a bayonet fixing.

**Fig. 1**

**Fig. 4**

Fig. 2

Fig. 5